# EUROPÄISCHE PATENTANMELDUNG

(11) **EP 2 708 914 A1**
(43) Veröffentlichungstag der Anmeldung: **19.03.2014**
(21) Anmeldenummer: 12184912.9
(22) Anmeldetag: 18.09.2012
(51) Int. Cl.: G01S 7/483, G01S 17/89, G01S 7/481

(54) **Optoelektronischer Sensor und Verfahren zur Erfassung einer Tiefenkarte**

(71) Anmelder: SICK AG, 79183 Waldkirch (DE)
(72) Erfinder: Hug, Gottfried, 79183 Waldkirch (DE); Tschuch, Sebastian, Dr., 79104 Freiburg (DE)
(74) Vertreter: Ludewigt, Christoph

(57) **Zusammenfassung**

Die Erfindung betrifft einen optoelektronischen Sensor zur Aufnahme einer Tiefenkarte einer dreidimensionalen Szene, umfassend eine Lichtquelle, die einen gepulsten Sendelichtstrahl erzeugt, eine einen MEMS-Spiegel aufweisende Ablenkeinheit zur Ablenkung des Sendelichtstrahls in zwei orthogonale Richtungen, einen Lichtempfänger zum Empfang reflektierter Lichtpulse und Erzeugen entsprechender Empfangssignale und eine Steuer- und Auswerteeinheit zur Ansteuerung der Lichtquelle, der Ablenkeinheit und des Empfängers und zur Auswertung der Empfangssignale und Ermitteln von Positionen von Reflexionen in der Szene durch Ermitteln von Abstandswerten aus der Pulslaufzeit und durch Erfassen der Ablenkwinkel der Ablenkeinheit. Um einen verbesserten optoelektronischen Sensor bereitzustellen, mit dem schnell und mit wenig Sendelicht eine Tiefenkarte aufgenommen werden kann, wird vorgeschlagen, dass der Empfänger als Photodiodenarray ausgebildet ist und eine Empfangsoptik vorgesehen ist, mit der die Szene auf das Empfängerarray abgebildet wird, wobei bei Aussenden des gepulsten Sendelichtstrahls nur die Photodioden aktiviert sind, auf die der mit dem Sendelichtstrahl beleuchtete Bereich der Szene abgebildet wird.

## Beschreibung

Die Erfindung betrifft einen optoelektronischen Sensor nach dem Oberbegriff von Anspruch 1 und ein Verfahren nach dem Oberbegriff von Anspruch 9.

Optoelektronische Sensoren gibt es in einem breiten Spektrum, das von eindimensionalen Lichtschranken und Lichttastern über Laserscanner bis zu Kameras reicht. Über die reine Objekterfassung hinaus wird in entfernungsmessenden Systemen auch eine Distanz zu dem Objekt bestimmt. Distanzsensoren nach dem Lichtlaufzeitprinzip messen dazu die Laufzeit eines Lichtsignals, die über die Lichtgeschwindigkeit der Entfernung entspricht. Man unterscheidet herkömmlich die pulsbasierte und die phasenbasierte Messung. In einem Pulslaufzeitverfahren wird ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist.

Mit Hilfe der Distanzinformation werden auch dreidimensionale Bilder oder sogenannte Tiefenkarten erfasst, wenn der Sensor ortsauflösend ist. Ein Scanner tastet dazu mit einem Lichtstrahl den Überwachungsbereich ab, während eine 3D-Kamera für jedes ihrer Pixel statt oder neben der Helligkeitsinformation auch eine Distanzinformation bestimmt. Dazu wird beispielsweise in jedem Pixel eine Lichtlaufzeitmessung implementiert.

In den meisten Fällen und besonders bei der Entfernungsmessung muss der Sensor zwischen Nutzlicht, beispielsweise eines eigenen oder zugeordneten Lichtsenders, und Umgebungslicht oder Störungen von anderen Lichtquellen unterscheiden können. Je nach Anwendung, etwa in besonders hellen Umgebungen, bei schlecht remittierenden Zielobjekten oder großen Messentfernungen, kann dies bei äußerst geringem Nutzlichtpegel eine sehr anspruchsvolle Aufgabe sein.

Aus der DE 101 46 752 A1 ist eine gattungsgemäße optoelektronische Vorrichtung zum Erfassen von Objekten in einer Szene bekannt, deren Sendelichtstrahlen von einem Schwingspiegel in zwei Raumrichtungen abgelenkt werden. Dieser Schwingspiegel ist als mikromechanischer Scannerspiegel (MEMS-Spiegel) ausgebildet. Als Empfänger dient eine einfache Photodiode, deren Signale in Abhängigkeit von der Ablenkposition des Schwingspiegels ausgewertet werden, wobei die gesamte Szene auf die Photodiode abgebildet wird. In einer Intensitätsauswertung erfolgt eine Bewertung der gemessenen Intensität gegen einen Schwellwert. Ist dieser Schwellwert überschritten, dann ist eine Reflexion erkannt und es kann eine Position über die Laufzeit in Verbindung mit den Ablenkwinkeln errechnet werden. Da immer die gesamte Szene auf den Empfänger abgebildet wird, erfasst dieser sämtliches Umgebungslicht. Deshalb muss ein sehr starker Laser eingesetzt werden, um überhaupt ein Reflexionssignal gegen das Umgebungslicht erkennen zu können. Das hat aber die weiteren Nachteile, dass einerseits wegen der Augensicherheit nur begrenzte Laserleistung zulässig ist und andererseits große Entfernungen wegen der großen Fremdlichtanteils nicht messbar sind.

Um auch geringste Empfangsintensitäten nachweisen zu können, wird in der Arbeit von Aull et al., "Geiger-Mode Avalance Photodiodes for Three Dimensional Imaging", Lincoln Laboratory Journal 13(2), 2002, Seiten 335-350, die Verwendung von Lawinenphotodioden im sogenannten Geiger-Modus für gepulstes Laserradar diskutiert. Im Geiger-Modus ist die Lawinenphotodiode oberhalb der Durchbruchspannung vorgespannt, so dass bereits ein einziger, durch ein einzelnes Photon freigesetzter Ladungsträger eine Lawine auslöst, die dann aufgrund der hohen Feldstärke sämtliche verfügbaren Ladungsträger rekrutiert. Die Lawinenphotodiode zählt somit wie der namensgebende Geigerzähler Einzelereignisse. Lawinenphotodioden im Geiger-Modus werden auch als SPAD (Single-Photon Avalanche Diode) bezeichnet. Ein wesentlicher Vorteil eines SPAD ist seine große Verstärkung. Diese ist so hoch, dass die Pulse direkt und ohne weitere Verstärkung in die Auswertung fließen können.

Die hohe Empfindlichkeit hat aber auch gravierende Nachteile, denn nicht nur ein einzelnes Nutzlichtphoton, sondern auch ein schwaches Störereignis durch Fremdlicht, optisches Übersprechen oder Dunkelrauschen kann den Lawinendurchbruch auslösen. Dieses Störereignis trägt dann mit dem gleichen, relativ starken Signal zum Messergebnis bei wie das empfangene Nutzlicht und ist davon auch aus dem Signal heraus nicht unterscheidbar. Anschließend bleibt die Lawinenphotodiode für eine Totzeit von ca. 10 bis 100 ns unempfindlich und fällt solange für weitere Messungen aus. Für eine pulsbasierte Distanzmessung bedeutet dies, dass eine Lawinenphotodiode im Geiger-Modus in einer beträchtlichen Zahl der Fälle anstelle der gesuchten Lichtlaufzeit eine zufällige Zeit eines Störereignis ausgibt und zudem für das eigentliche Messereignis geblendet ist. Die Distanzbestimmung ist deshalb äußerst unzuverlässig und fremdlichtanfällig. Das gilt ganz entsprechend für eine 3D-Kamera auf Lichtlaufzeitbasis. Hier ist Regel- und nicht Ausnahmefall, dass eine größere Anzahl von Pixeln anstelle des Empfangspulses ein Störereignis registriert, so dass die Tiefenkarte löchrig beziehungsweise mit Störstellen überzogen wird. Zusätzlich besteht hier das Problem, dass die gesamte Szene mit Laserpulsen ausgeleuchtet werden muss, wozu in einer tatsächlichen Anwendung, die nicht unter Laborbedingungen laufen soll, ein Laser mit sehr hoher Leistung benötigt wird, was einerseits wegen der hohen Leistungsaufnahme und andererseits wegen der Augensicherheit nicht realistisch ist.

In einer weiteren Arbeit von Massa et al. "Optical design and evaluation of a three-dimensional imaging and ranging system based on time-correlated single-photon counting", Applied Optics von February 20, 2002, Vol. 41, No. 6, wurde eine Tiefenkarte aufgenommen, indem ein einstrahliger Sensor, der einen Laser und ein SPAD umfasst, mit Schrittmotoren in x- und y- Richtung verschwenkt und so die Szene Punkt für Punkt abgescannt hat. Für eine reale Anwendung, in der eine Tiefenkarte aufgenommen und vielleicht sogar beobachtet werden soll, ist dieser Aufbau ungeeignet, denn es wird die gesamte Apparatur verschwenkt und das Aufnehmen einer kompletten Szene wird beim Abscannen mittels Schrittmotoren unrealistisch lange dauern.

Es ist daher Aufgabe der Erfindung, einen verbesserten optoelektronischen Sensor bereitzustellen, mit dem schnell und mit wenig Sendelicht eine Tiefenkarte aufgenommen werden kann und ein entsprechendes Verfahren anzugeben.

Diese Aufgabe wird durch einen optoelektronischen Sensor mit den Merkmalen nach Anspruch 1 beziehungsweise ein Verfahren mit den Merkmalen des Anspruchs 9 gelöst.

Ein erfindungsgemäßer optoelektronischer Sensor zur Aufnahme einer Tiefenkarte einer dreidimensionalen Szene umfasst eine Lichtquelle, die einen gepulsten Sendelichtstrahl erzeugt, eine einen MEMS-Spiegel aufweisende Ablenkeinheit zur Ablenkung des Sendelichtstrahls in zwei orthogonale Richtungen, einen Lichtempfänger zum Empfang reflektierter Lichtpulse und Erzeugen entsprechender Empfangssignale und eine Steuer- und Auswerteeinheit zur Ansteuerung der Lichtquelle, der Ablenkeinheit und des Empfängers und zur Auswertung der Empfangssignale und Ermitteln von Positionen von Reflexionen in der Szene durch Ermitteln von Abstandswerten aus der Pulslaufzeit und durch Erfassen der Ablenkwinkel der Ablenkeinheit. Erfindungsgemäß ist der Empfänger als Photodiodenarray ausgebildet und es ist eine Empfangsoptik vorgesehen, mit der die Szene auf das Empfängerarray abgebildet wird, wobei bei Aussenden des gepulsten Sendelichtstrahls nur die Photodioden aktiviert sind, auf die der mit dem Sendelichtstrahl beleuchtete Bereich der Szene abgebildet wird.

Der erfindungsgemäße Sensor kann einen extrem kompakten Aufbau aufgrund des Einsatzes eines MEMS-Spiegels haben, so dass der Sensor auch in einem mobilen Kommunikationsgerät Platz findet, beispielsweise einem Notebook oder einem Mobiltelefon.

Anders als bei einem herkömmlichen Scanner wird der Empfangslichtstrahl nicht über den MEMS-Spiegel der Ablenkeinheit des Sendelichtstrahl geführt, sondern stattdessen betrachtet der Lichtempfänger die gesamte abgetastete Szenerie ohne Umlenkung über einen Spiegel mit entsprechender synchroner Aktivierung eines Teilbereichs. Dabei besteht die Möglichkeit, die Position des erwarteten Empfangslichtflecks aus der Orientierung der Ablenkeinheit zu bestimmen. Diese Orientierung, die dem momentan von dem Sendelichtstrahl abgetasteten Punkt der Szenerie entspricht, ist beispielsweise aus einem Steuersignal für den MEMS-Spiegel, dessen bekanntem Zeitverhalten oder einem Feedbacksignal des MEMS-Spiegels bekannt. Es werden dann nur Photodioden in einem Teilbereich des Lichtempfängers aktiviert, welcher Licht aus dem Bereich der Szenerie empfängt, den der Sendelichtstrahl gerade abtastet.

Vorzugsweise Schwingt der MEMS-Spiegel dabei in Resonanz und tastet daher mit dem Sendelichtstrahl eine Zeile der Szenerie sehr schnell ab. Um die komplette Szene abzutasten, wird der schnellen Schwingung eine langsamere Ablenkbewegung des MEMS-Spiegels in einer senkrechten Richtung dazu überlagert.

Durch die erfindungsgemäße Aktivierung nur derjenigen Photodioden des Arrays, auf die auch der vom Sendelicht beleuchtete Bereich abgebildet wird, erfolgt quasi ein zum MEMS-Spiegel synchrones Scannen eines (aktivierten) Empfangsbereichs. Durch diese "Verfolgung" des Lichtflecks auf dem Empfänger wird das Problem der Dunkel- und Fremdlichtauslösung auf dem Empfänger erheblich reduziert. Denn der Empfänger ist bis auf den aktivierten Bereich "blind" und die Empfindlichkeit (z.B. die Verstärkung) der aktivierten Photodioden kann entsprechend hoch eingestellt werden. Damit ist eine wesentlich kleinere Laserleistung für die Beleuchtung möglich, was einerseits die Augensicherheit erhöht und andererseits größere Sichtweiten zulässt.

Ein weiterer wesentlicher Vorteil ist, dass Verlustleistung erheblich herabgesetzt ist. Wenn beispielsweise die Szene relativ hell ist und alle Pixel aktiviert wären, würde in einem Array von beispielsweise 600x800 Pixeln eine gewaltige Verlustleistung auftreten, da nahezu alle Pixel Photonen registrieren würden. Entsprechend geringer ist die Verlustleistung bei nur teilweiser Aktivierung, wenn zum Beispiel nur jeweils 10x10 Pixel aktiviert sind.

Die Position des erwarteten Empfangslichtflecks und damit die Maßgabe, welche Photodioden bei welcher Ablenkung des Sendelichts aktiviert werden, wird bevorzugt in der Steuer- und Auswerteeinheit berechnet, wobei eine gewisse Toleranz dabei einzurechnen ist. Denn die Lichtquelle und der Empfänger haben einen Abstand zueinander und die Szene wird über die Empfangsoptik auf den Empfänger abgebildet. Das kann aber wegen der Triangulationsanordnung zu unterschiedlichen Auftreffpunkten des Lichtflecks auf dem Empfänger führen, je nachdem wie groß der Abstand Sensor - beleuchtetes Objekt ist. Es ist deshalb sinnvoll, Lichtquelle und Empfänger möglichst dicht beieinander anzuordnen und den Bereich aktivierter Photodioden ausreichend groß zu haben, um diesen "Triangulationseffekt" möglichst klein zu halten.

Dabei erfolgt eine elektronische Synchronisation der Ansteuersignale für den MEMS-Spiegel mit den Aktivierungssignalen für die zu aktivierenden Photodioden.

Besonders vorteilhaft ist die Erfindung, wenn die Photodioden als SPAD (Single-Photon Avalanche Diode) ausgebildet sind, denn dann fallen die oben schon genannten Probleme der Dunkel- und Fremdauslösung und das Problem der Verlustleistung besonders stark ins Gewicht. Denn Auslösungen durch Fremdlicht oder Dunkelauslösungen sind bei Einsatz von SPAD nicht von Nutzlichtauslösungen zu unterscheiden, was insbesondere bei hellen Szenen problematisch ist, wobei dann auch noch höhere Verlustleistungen auftreten, da ja bereits ein einzelnes Photon eine Auslösung bewirkt.

SPADs weisen bevorzugt eine Durchbruchspannung von höchstens 70 V, insbesondere von höchstens 50 V, 30 V oder 15 V auf. Eine Hochspannungsversorgung wie bei herkömmlich genutzten Lawinenphotodioden kann damit entfallen, und es werden erheblich geringere Herstellkosten möglich.

Die Lawinenphotodiodenelemente sind vorzugsweise in einem CMOS-Prozess hergestellt als Matrixstruktur auf einem gemeinsamen Substrat. Der Lichtempfänger wird somit kostengünstig verfügbar. Ein CMOS-Bauteil ermöglicht unter anderem kleine Strukturen und somit auch eine im Vergleich zu einer herkömmlichen Lawinenphotodiode deutlich herabgesetzte Durchbruchspannung.

Die Aktivierung der SPAD ist durch einfaches Erhöhen der Photodiodenspannung um wenige Volt von einem Niveau unterhalb der Druchbruchspannung auf ein Niveau über der Druchbruchspannung möglich, wodurch eine sehr einfache und nach EMV Gesichtspunkten wenig störende Aktivierung möglich ist.

Da mittels des MEMS-Spiegels der Ablenkeinheit ein zeilenweises Abscannen der Szene erfolgt, werden vorteilhaft die Photodioden auch zeilenweise ausgelesen und ausgewertet, wobei die Auswertung der Empfangssignale synchron zur Aktivierung erfolgen kann.

Die Brennebene der Empfangsoptik stimmt bevorzugt nicht mit einer Ebene des Lichtempfängers überein. Mit anderen Worten ist die Empfangsoptik absichtlich defokussiert, so dass ein Empfangslichtfleck mehrere Photodioden, beispielsweise mindestens eine Gruppe von Photodioden, abdeckt. Dies bewirkt keinen Auflösungsverlust, weil die Auflösung durch den Sendelichtstrahl und dessen Querschnitt beziehungsweise die Winkelauflösung des Scanners vorgegeben wird. Deshalb kann auch ein aktiver Bereich des Lichtempfängers, in dem der Empfangslichtstrahl erwartet und registriert wird, erheblich größer sein als die resultierende Bildauflösung. Daraus ergeben sich Freiheiten für die Anpassung der Empfindlichkeit durch die Anzahl zu einem Bildpunkt beitragender Photodioden.

Das erfindungsgemäße Verfahren zur Aufnahme einer Tiefenkarte einer dreidimensionalen Szene umfasst die Schritte:
- Erzeugen eines Sendelichtstrahls bestehend aus Sendelichtpulsen,
- periodisches Ablenken des Sendelichtstrahls mit einem MEMS-Spiegel in zwei orthogonale Richtungen und Abscannen der Szene,
- Empfangen der in der Szene reflektierten Lichtpulse mit einem Lichtempfänger und Erzeugen entsprechender Empfangssignale,
- Ermitteln von Positionen der Reflexionen mit einer Steuer- und Auswerteeinheit durch Ermitteln von Abstandswerten aus der Pulslaufzeit und Erfassen der Ablenkwinkel,
- und Abbilden der Szene auf den Empfänger mit einer Empfangsoptik wobei
- der Empfänger unterteilt ist in einzelne Photodioden, so dass durch die Empfangsoptik jeweils nur ein Teilbereich der Szene auf eine Photodiode abgebildet wird
- und bei Aussenden des gepulsten Sendelichtstrahls nur die Photodioden aktiviert werden, auf die der mit dem Sendelichtstrahl beleuchtete Bereich der Szene abgebildet wird.

Die Erfindung wird nachstehend unter Bezugnahme auf die beigefügte Zeichnung anhand eines Ausführungsbeispiels erläutert. Die Figuren der Zeichnung zeigen in:
- Fig.1: eine Blockdarstellung eines erfindungsgemäßen, optoelektronischen Sensors;
- Fig. 2: eine sehr schematische Darstellung des Sende- und Empfangslichtpfades zur Verdeutlichung der Funktionsweise;
- Fig. 3: ein beispielhaftes vereinfachtes Ersatzschaltbild einer Lawinenphotodiode im Geiger-Modus.

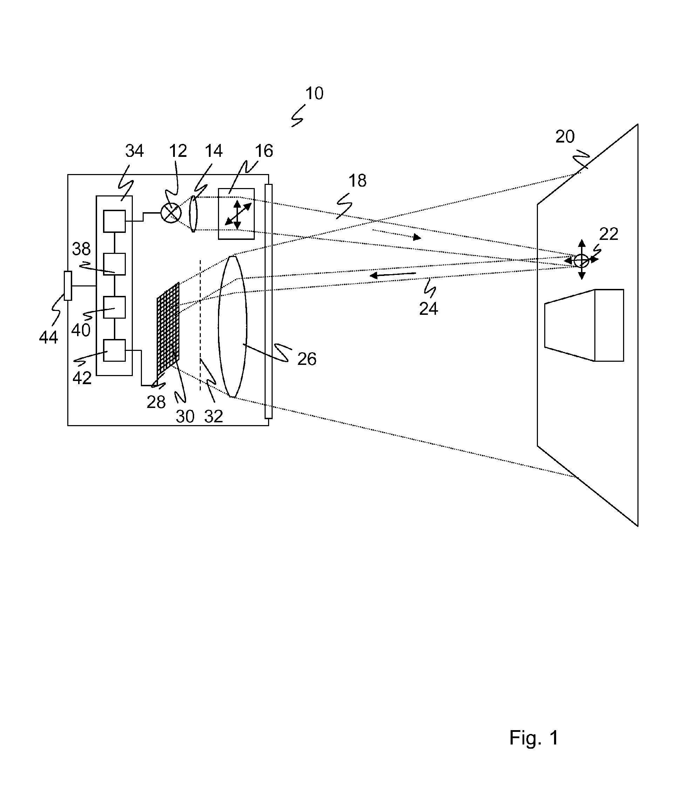

Figur 1 zeigt eine Blockdarstellung eines erfindungsgemäßen, optoelektronischen Sensors 10, der als kompakter Scanner mit einem MEMS-Spiegel ausgebildet ist. Diese Ausführungsform ist nur beispielhaft zu verstehen.

Der Sensor 10 weist eine Lichtquelle 12 auf, beispielsweise eine Laserdiode, deren Sendelicht in Form kurzer Pulse zunächst in einer Sendeoptik 14 kollimiert und dann von einer Ablenkeinheit, die einen MEMS-Ablenkspiegel 16 umfasst, als Sendelichtstrahl 18 in eine Szene, hier ein Überwachungsbereich 20, abgelenkt wird.

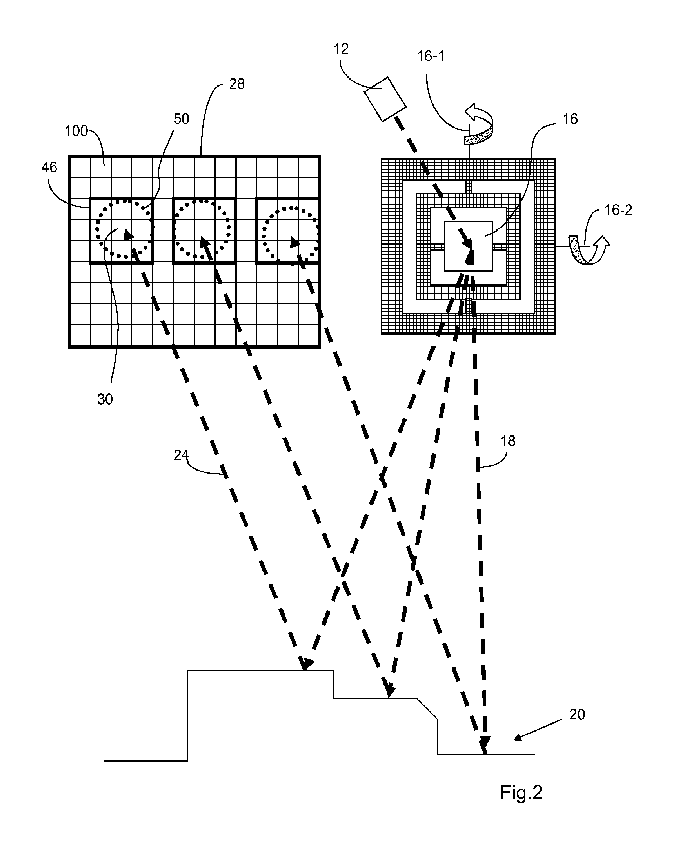

Ein solcher MEMS-Ablenkspiegel 16 ist in Fig. 2 schematisch dargestellt. Der prinzipielle Aufbau und Funktionsweise sind beispielsweise aus der DE 42 29 507 C2 grundsätzlich bekannt. Auf einer Achse 16-1 schwingt der Spiegel 16 in Resonanz und wird in einer zweiten Achse 16-2 langsam periodisch verschwenkt. Dadurch scannt ein Abtastlichtfleck 22 zeilenweise den Überwachungsbereich 20 ab. Das an Objekten in dem Überwachungsbereich 20 remittierte Licht wird als Empfangslicht 24 über eine Empfangsoptik 26 auf einen Lichtempfänger 28 mit einer Vielzahl von in Pixeln angeordneter Lichtempfangselemente 30 in Form von Photodioden geleitet. Die Photodioden sind insbesondere als SPADs (Single-Photon Avalanche Diodes) ausgebildet. Die Anordnung ist so gewählt, dass die gesamte Szene 20 auf den Lichtempfänger 28, der als Empfängerarray ausgebildet ist, abgebildet wird.

Wie durch eine gestrichelte Linie 32 dargestellt, stimmt die Brennebene der Empfangsoptik 26 nicht mit der Ebene des Lichtempfängers 28 überein. Die Empfangsoptik 26 ist also gezielt defokussiert, so dass das Empfangslicht 24 nicht unbedingt scharf auf wenige Lichtempfangselemente 30, sondern aufgeweitet auf eine Gruppe der Lichtempfangselemente 30 abgebildet wird.

In dem Sensor 10 ist weiterhin eine Steuer- und Auswertungseinheit 34 vorgesehen, die mit dem Lichtsender 12, der den MEMS-Ablenkspiegel 16 enthaltenen Ablenkeinheit und dem Lichtempfänger 28 verbunden ist. Die Steuer- und Auswerteeinheit 34 umfasst eine Lichtlaufzeitmesseinheit 38, eine Aktivierungseinheit 40 und eine Bildauswertungseinheit 42. Über einen Ausgang 44 kann die Auswertungseinheit 34 Bilddaten, insbesondere Tiefenkartendaten und andere Sensormessdaten ausgeben, beziehungsweise umgekehrt Steuer- und Parametrieranweisungen entgegennehmen.

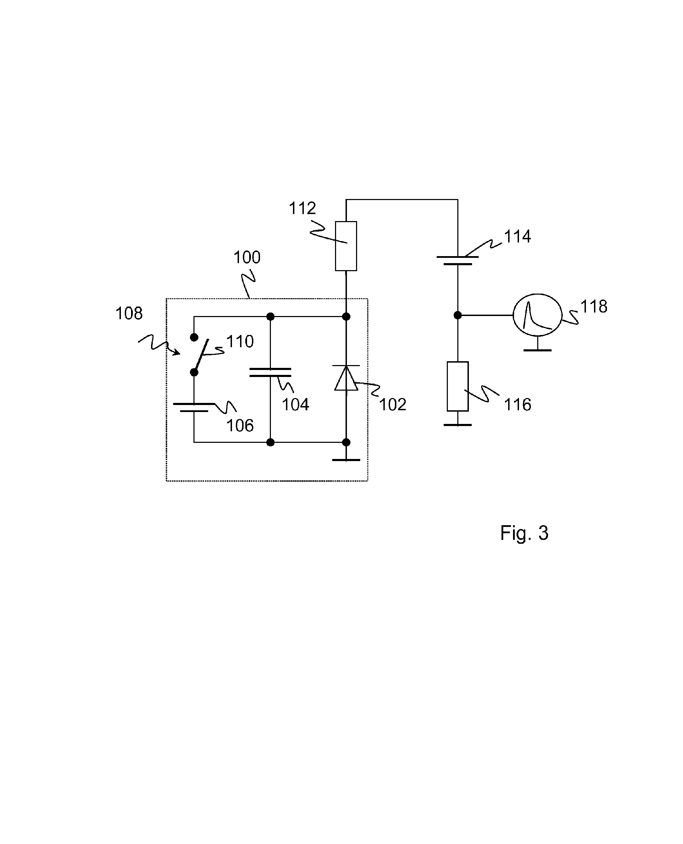

Die Lichtempfangselemente 30 des Lichtempfängers 32 sind Lawinenphotodioden, die zur Erfassung von Empfangslicht 24 im Geiger-Modus betrieben werden, die dann auch als SPAD bezeichnet werden. Zur Erläuterung zeigt Fig. 3 ein beispielhaftes vereinfachtes Ersatzschaltbild einer Lawinenphotodiode. In der Praxis handelt es sich um ein Halbleiterbauteil, dessen nicht dargestellter Aufbau hier als bekannt vorausgesetzt wird. Die Lawinenphotodiode 100 zeigt zum einen das Verhalten einer Diode 102. Sie hat eine Kapazität, die durch einen parallel geschalteten Kondensator 104 repräsentiert wird. Der mögliche Lawinendurchbruch erzeugt Ladungsträger, deren Ursprung in dem Ersatzschaltbild als Stromquelle 106 dargestellt wird. Der Lawinendurchbruch wird durch ein auftreffendes Photon 108 ausgelöst, wobei dieser Vorgang wie ein Schalter 110 wirkt. Nach außen ist die Lawinenphotodiode über einen Widerstand 112 mit einer Stromquelle 114 verbunden. Zwischen dieser Stromquelle und einem weiteren Widerstand 116 kann an einem Punkt 118 das Ausgangssignal betrachtet werden.

Im Bereitschaftszustand liegt über der Diode 102 eine Spannung oberhalb der Durchbruchspannung an. Erzeugt dann ein einfallendes Photon 108 ein Ladungsträgerpaar, so schließt dies gleichsam den Schalter 110, so dass die Lawinenphotodiode über die Stromquelle 106 mit Ladungsträgern geflutet wird. Neue Ladungsträger entstehen aber nur, solange das elektrische Feld stark genug bleibt. Wird durch die Stromquelle 106 der Kondensator 104 so weit entladen, dass die Durchbruchspannung unterschritten ist, so kommt die Lawine von selbst zum Erliegen ("passive quenching"). Danach wird der Kondensator 104 von der äußeren Stromquelle 114 über den Widerstand 112 wieder aufgeladen, bis wieder eine Spannung über der Durchbruchspannung an der Diode 102 anliegt. Es gibt alternative Ausgestaltungen, in denen die Lawine von außen erkannt und daraufhin eine Entladung unter die Durchbruchspannung ausgelöst wird ("active quenching").

Während der Lawine steigt das Ausgangssignal am Punkt 118 rapide und unabhängig von der Intensität des auslösenden Lichts, hier eines Photons 108, auf einen Maximalwert an und fällt dann nach dem Löschen der Lawine wieder ab. Die Pulsform ist am Punkt 118 angedeutet. Die Zeitkonstante des Abfalls, welche eine Totzeit der Lawinenphotodiode 100 angibt, bestimmt sich aus der Kapazität des Kondensators 104 und dem Widerstand 112 und liegt typischerweise im Bereich einiger bis einiger zehn Nanosekunden. Die Totzeit ist keine absolute Totzeit, denn sobald die Vorspannung groß genug ist, um eine Lawine zu unterstützen, kann das Ausgangssignal auch wieder ansteigen, allerdings nicht im gleichen Maße wie aus dem Bereitschaftszustand. Der Verstärkungsfaktor liegt typischerweise in einer Größenordnung von 10^5 bis 10^7 und ergibt sich im Wesentlichen aus der maximalen Anzahl von Ladungsträgern, die von der Lawine in der Lawinenphotodiode 100 rekrutiert werden können.

Fällt das zu messende Ereignis in die Totzeit, so ist die Lawinenphotodiode 100 weitgehend blind. Die Lawinenphotodiode 100 reagiert auch auf jedes Einzelereignis mit dem gleichen Signal, das Abwarten einer ausreichenden Totzeit und Auslösen eines Ladungsträgerpaares vorausgesetzt. Allein ist eine Lawinenphotodiode 100 deshalb weitgehend ungeeignet, um eine Empfangsintensität zu bewerten. Außerdem kann ein einzelnes Photon des Umgebungslichts oder ein einziges Ladungsträgerpaar aufgrund von Dunkelrauschen genügen, um eine Lawine auszulösen, die nichts mit dem zu messenden Ereignis zu tun hat.

Auf dem Lichtempfänger 28 ist eine Vielzahl von einzelnen Lawinenphotodiodenelementen 100 vorgesehen. Ein entsprechendes Bauelement kann beispielsweise in einem CMOS-Prozess hergestellt werden. Die Durchbruchspannung der Lawinenphotodiodenelemente 100 ist deutlich geringer als bei herkömmlichen Lawinenphotodioden und beträgt beispielsweise höchstens 70 V oder sogar nur 15 V-30 V.

Fig. 2 zeigt unter anderem eine schematische Draufsicht auf eine Anordnung von Lichtempfangselementen 30 des Lichtempfängers 28 in Form von Lawinenphotodioden 100 in einer orthogonalen Matrixstruktur. Auf dem Lichtempfänger 28 sind Lichtempfangselemente 30 kachelartig zu Gruppen 46 zusammengefasst.

Für die Aufnahme einer Tiefenkarte wird nun der Lichtsender 12 mit kurzen Lichtpulsen betrieben, die mit Hilfe des MEMS-Ablenkspiegels 16 den Überwachungsbereich 20 zeilenweise abtasten. Wegen der defokussierten Empfangsoptik 26, oder auch aufgrund des intrinsischen Querschnitts des Sendelichtstrahls 18 bei fokussierter Empfangsoptik, fällt der Empfangslichtfleck 50 auf mehrere Lichtempfangselemente 30. In Abhängigkeit einer Vielzahl von Faktoren, wie Entfernung zum angetasteten Objekt, dessen Remission, Leistung des Lichtpulses oder Fläche der Lichtempfangselemente 30, werden in einigen der Lawinenphotodioden 100 innerhalb des Empfangslichtflecks 50 die einer ungebremsten Lawine entsprechenden Signale ausgelöst. Zugleich geschieht dies auch in einer Anzahl von Lawinenphotodioden 100 innerhalb und außerhalb des Empfangslichtflecks 50 aufgrund von Ereignissen, die mit der Messung in keinem Zusammenhang stehen, etwa Fremdlicht oder Dunkelrauschen.

Die Lichtlaufzeitmesseinheit 38 bestimmt die Lichtlaufzeit zwischen Aussenden eines Lichtpulses und dessen Registrieren in dem Lichtempfänger 30, um daraus über die konstante Lichtgeschwindigkeit eine Distanz zu dem angetasteten Objektabschnitt des Überwachungsbereichs 20 zu berechnen. Im Verlauf der Abtastung durch den MEMS-Ablenkspiegel 16 entsteht dann eine Tiefenkarte des Überwachungsbereichs 20.

Der MEMS-Ablenkspiegel 16 steht mit der Auswertungseinheit 34 und speziell der Aktivierungseinheit 40 in Verbindung, so dass die aktuelle Orientierung des MEMS-Ablenkspiegels, damit die Richtung des Sendelichtstrahls 18 und die erwartete Position des Empfangslichtflecks 50 auf dem Lichtempfänger 28 bekannt ist. Die Aktivierungseinheit 40 ist damit in der Lage, diejenigen Lichtempfangselemente 30 zu deaktivieren, die ohnehin nicht so positioniert sind, dass sie Nutzlicht empfangen könnten. Dafür werden nur die Lichtempfangselemente 30 innerhalb der erwarteten Position des Empfangslichtflecks 50 aktiviert, d.h. oberhalb der Durchbruchspannung vorgespannt. Die erwartete Position des Empfangslichtflecks 50 und damit der Bereich aktiver Lichtempfangselemente 30 vollzieht also auf dem Lichtempfänger 18 eine der Abtastung des Überwachungsbereichs 20 durch den Abtastlichtfleck 22 entsprechende Bewegung. Dabei entspricht jeweils der Bereich um die erwartete Position des Lichtflecks 50 wie in Fig. 2, einer Gruppe 46. Die Auflösung wird nicht empfangs- sondern sendeseitig durch Parameter wie den Querschnitt des Sendelichtstrahls 18, die Pulslänge der Sendelichtpulse sowie deren Wiederholfrequenz oder die Winkelauflösung des MEMS-Ablenkspiegels 16 festgelegt. Der tatsächliche Empfangslichtfleck hängt zusätzlich von der Defokussierung der Empfangsoptik 26 ab, die deshalb passend eingestellt sein sollte.

Die so entstandene Tiefenkarte kann anschließend noch durch Bildverarbeitung in der Bildverarbeitungseinheit 42 verbessert werden, etwa durch Bearbeitung mit Glättungsfiltern, eine Plausibilisierung oder Ergänzung durch Vergleich mit früheren Bildern (Szenenauswertung, Objekterkennung, Objekttracking), eine Kanten- oder Flächenvervollständigung (Region Growing) und dergleichen.

## Patentansprüche

1. Optoelektronischer Sensor zur Aufnahme einer Tiefenkarte einer dreidimensionalen Szene mit
- einer Lichtquelle, die einen gepulsten Sendelichtstrahl erzeugt,
- einer einen MEMS-Spiegel aufweisenden Ablenkeinheit zur Ablenkung des Sendelichtstrahls in zwei orthogonale Richtungen,
- einem Lichtempfänger zum Empfang reflektierter Lichtpulse und Erzeugen entsprechender Empfangssignale,
- einer Steuer- und Auswerteeinheit zur Ansteuerung der Lichtquelle, der Ablenkeinheit und des Empfängers und zur Auswertung der Empfangssignale und Ermitteln von Positionen von Reflexionen in der Szene durch Ermitteln von Abstandswerten aus der Pulslaufzeit und durch Erfassen der Ablenkwinkel der Ablenkeinheit,
**dadurch gekennzeichnet,**
- **dass** der Empfänger als Photodiodenarray ausgebildet ist,
- **dass** eine Empfangsoptik vorgesehen ist, mit der die Szene auf das Empfängerarray abgebildet wird,
- **dass** bei Aussenden des gepulsten Sendelichtstrahls nur die Photodioden aktiviert sind, auf die der mit dem Sendelichtstrahl beleuchtete Bereich der Szene abgebildet wird.

2. Optoelektronischer Sensor nach Anspruch 1, **dadurch gekennzeichnet, dass** der MEMS-Spiegel elektronisch angetrieben wird und in Resonanz schwingt und die Ansteuersignale für den MEMS-Spiegel mit den Aktivierungssignalen für die zu aktivierenden Photodioden elektronisch synchronisiert sind.

3. Optoelektronischer Sensor nach einem der vorhergehenden Ansprüche, **dadurch gekennzeichnet, dass** die Photodioden als SPAD (Single Photon Avalanche Diode) ausgebildet sind.

4. Optoelektronischer Sensor nach Anspruch 3, **dadurch gekennzeichnet, dass** die Aktivierung der SPAD durch Erhöhen der Photodiodenspannung von einem Niveau unterhalb der Druchbruchspannung auf ein Niveau über der Druchbruchspannung erfolgt.

5. Optoelektronischer Sensor nach einem der vorhergehenden Ansprüche, **dadurch gekennzeichnet, dass** die Erfassung der Szene zeilenweise erfolgt.

6. Optoelektronischer Sensor nach einem der vorhergehenden Ansprüche, **dadurch gekennzeichnet, dass** die Photodioden zeilenweise ausgelesen und ausgewertet werden.

7. Optoelektronischer Sensor nach einem der vorhergehenden Ansprüche, **dadurch gekennzeichnet, dass** die Auswertung der Empfangssignale synchron zur Aktivierung erfolgt.

8. Optoelektronischer Sensor nach einem der vorhergehenden Ansprüche, **dadurch gekennzeichnet, dass** der Empfänger nicht im Fokus der abbildenden Empfangsoptik liegt und das reflektierte Licht auf mehrere Photodioden gleichzeitig abgebildet wird.

9. Verfahren zur Aufnahme einer Tiefenkarte einer dreidimensionalen Szene mit einem optoelektronischen Sensor nach einem der vorhergehenden Ansprüche, **gekennzeichnet durch** die Schritte:
- Erzeugen eines Sendelichtstrahls bestehend aus Sendelichtpulsen,
- periodisches Ablenken des Sendelichtstrahls mit einem MEMS-Spiegel in zwei orthogonale Richtungen und Abscannen der Szene,
- Empfangen der in der Szene reflektierten Lichtpulse mit einem Lichtempfänger und Erzeugen entsprechender Empfangssignale,
- Ermitteln von Positionen der Reflexionen mit einer Steuer- und Auswerteeinheit **durch** Ermitteln von Abstandswerten aus der Pulslaufzeit und Erfassen der Ablenkwinkel,
- und Abbilden der Szene auf den Empfänger mit einer Empfangsoptik wobei,
- der Empfänger unterteilt ist in einzelne Photodioden, so dass **durch** die Empfangsoptik jeweils nur ein Teilbereich der Szene auf eine Photodiode abgebildet wird
- und bei Aussenden des gepulsten Sendelichtstrahls nur die Photodioden aktiviert werden, auf die der mit dem Sendelichtstrahl beleuchtete Bereich der Szene abgebildet wird.

10. Verfahren nach Anspruch 9, **dadurch gekennzeichnet, dass** die Photodioden im Geigermodus betrieben werden.

## Geänderte Patentansprüche

### Geänderte Patentansprüche gemäss Regel 137(2) EPÜ.

**1.** Optoelektronischer Sensor zur Aufnahme einer Tiefenkarte einer dreidimensionalen Szene mit
- einer Lichtquelle (12), die einen gepulsten Sendelichtstrahl (18) erzeugt,
- einer einen MEMS-Spiegel (16) aufweisenden Ablenkeinheit zur Ablenkung des Sendelichtstrahls (18) in zwei orthogonale Richtungen,
- einem Lichtempfänger (28) zum Empfang reflektierter Lichtpulse und Erzeugen entsprechender Empfangssignale,
- einer Steuer- und Auswerteeinheit (34) zur Ansteuerung der Lichtquelle (12), der Ablenkeinheit (16) und des Empfängers (28) und zur Auswertung der Empfangssignale und Ermitteln von Positionen von Reflexionen in der Szene durch Ermitteln von Abstandswerten aus der Pulslaufzeit und durch Erfassen der Ablenkwinkel der Ablenkeinheit,
**dadurch gekennzeichnet,**
- **dass** der Empfänger (28) als Photodiodenarray (28) ausgebildet ist, mit einer Vielzahl von Empfangselementen (30), die als SPAD (Single Photon Avalanche Dioden) ausgebildet sind, (Seite 8, Z. 5-7)
- **dass** eine Empfangsoptik (26) vorgesehen ist, mit der die Szene auf das Empfängerarray (28) abgebildet wird,
- **dass** die Steuer- und Auswerteeinheit (34) eine Aktivierungseinheit (40) aufweist, die mit dem MEMS-Spiegel (16) in Verbindung steht, so dass die aktuelle Orientierung des MEMS-Spiegels (16) und damit die Richtung des Sendelichtstrahls (18) und die erwartete Position eines Empfangslichtflecks (50) auf dem Lichtempfänger (28) bekannt ist, so dass die Aktivierungseinheit (40) damit in der Lage ist, diejenigen Lichtempfangselemente (30) zu deaktivieren, die nicht so positioniert sind, dass sie Nutzlicht empfangen könnten und in der Lage ist, nur die Lichtempfangselemente (30) innerhalb der erwarteten Position des Empfangslichtflecks (50) zu aktivieren, so dass bei Aussenden des gepulsten Sendelichtstrahls nur die Photodioden aktiviert sind, auf die der mit dem Sendelichtstrahl beleuchtete Bereich der Szene abgebildet wird.

**2.** Optoelektronischer Sensor nach Anspruch 1, **dadurch gekennzeichnet, dass** der MEMS-Spiegel elektronisch angetrieben wird und in Resonanz schwingt und die Ansteuersignale für den MEMS-Spiegel mit den Aktivierungssignalen für die zu aktivierenden Photodioden elektronisch synchronisiert sind.

**3.** Optoelektronischer Sensor nach einem der vorhergehenden Ansprüche, **dadurch gekennzeichnet, dass** die Aktivierung der SPAD durch Erhöhen der Photodiodenspannung von einem Niveau unterhalb der Druchbruchspannung auf ein Niveau über der Druchbruchspannung erfolgt.

**4.** Optoelektronischer Sensor nach einem der vorhergehenden Ansprüche, **dadurch gekennzeichnet, dass** die Erfassung der Szene zeilenweise erfolgt.

**5.** Optoelektronischer Sensor nach einem der vorhergehenden Ansprüche, **dadurch gekennzeichnet, dass** die Photodioden zeilenweise ausgelesen und ausgewertet werden.

**6.** Optoelektronischer Sensor nach einem der vorhergehenden Ansprüche, **dadurch gekennzeichnet, dass** die Auswertung der Empfangssignale synchron zur Aktivierung erfolgt.

**7.** Optoelektronischer Sensor nach einem der vorhergehenden Ansprüche, **dadurch gekennzeichnet, dass** der Empfänger nicht im Fokus der abbildenden Empfangsoptik liegt und das reflektierte Licht auf mehrere Photodioden gleichzeitig abgebildet wird.

**8.** Verfahren zur Aufnahme einer Tiefenkarte einer dreidimensionalen Szene mit einem optoelektronischen Sensor nach einem der vorhergehenden Ansprüche, **gekennzeichnet durch** die Schritte:
- Erzeugen eines Sendelichtstrahls (18) bestehend aus Sendelichtpulsen,
- periodisches Ablenken des Sendelichtstrahls (18) mit einem MEMS-Spiegel (16) in zwei orthogonale Richtungen und Abscannen der Szene (20),
- Empfangen der in der Szene (20) reflektierten Lichtpulse mit einem Lichtempfänger (28) und Erzeugen entsprechender Empfangssignale,
- Ermitteln von Positionen der Reflexionen mit einer Steuer- und Auswerteeinheit (34) **durch** Ermitteln von Abstandswerten aus der Pulslaufzeit und Erfassen der Ablenkwinkel,
- und Abbilden der Szene (20) auf den Empfänger (28) mit einer
Empfangsoptik (26)
**wobei,**
- der Empfänger (28) unterteilt ist in einzelne Photodioden (30), so dass durch die Empfangsoptik (26) jeweils nur ein Teilbereich der Szene (20) auf eine Photodiode (30) abgebildet wird,
- die Photodioden (30) im Geigermodus betrieben werden
- und bei Aussenden des gepulsten Sendelichtstrahls (18) nur die Photodioden aktiviert werden, auf die der mit dem Sendelichtstrahl (18) beleuchtete Bereich der Szene (20) abgebildet wird.
